# EUROPEAN PATENT APPLICATION

(11) **EP 0 562 366 A2**
(43) Date of publication of application: **29.09.1993**
(21) Application number: 93103860.8
(22) Date of filing: 10.03.1993
(51) Int. Cl.: E06B 3/00, E06B 3/70

(54) **Door in particular for up-and-over door units of motor vehicle garages**

(30) Priority: 24.03.1992 IT MI920277 U
(71) Applicant: C. PEREGO S.R.L., I-22050 Verderio Inferiore (Como) (IT)
(72) Inventor: Perego, Carlo, I-20040 Cornate d'Adda (Milano) (IT)
(74) Representative: Giambrocono, Alfonso, Dr. Ing.

(57) **Abstract**

A door in particular for up-and-over door units of motor vehicle garages, comprising a plurality of modular panels (2) connected together, and a plurality of strengthening and stiffening cross-members (3) connected to said panels (2) by plastic deformation at discrete points (13) of said cross-members (3) and panels (2).

## Description

This invention relates to a door, in particular for an up-and-over door unit of motor vehicle garages.

As known doors of the aforesaid type are generally of large dimensions and have to be of low weight to enable them to be easily opened, they are generally constructed by connecting a plurality of strengthening and stiffening cross-members to a small-thickness flat element extending over the entire aperture to be closed by the door unit.

It is known to connect said cross-members to the flat element by rivets or self-tapping screws or, more frequently, by spot welding.

In the first case the cross-member connection operation is difficult to automate, resulting in a considerable increase in the final door unit production cost.

In addition connection members in the form of rivets or screws are generally of a different material or different colour than the flat element and cross-embers. This results in an unpleasant appearance, which is generally overcome by repainting the door when it has been assembled.

These drawbacks are partly overcome by assembling the door by spot welding. In this case the door construction can be automated.

However the spot welding operation results in surface burning of a large area about the weld spot. Hence it is not possible to use prepainted or pretreated flat elements or cross-members as these parts would be ruined by the welding. The door must therefore undergo such treatment after its assembly.

An object of the present invention is to provide a door, in particular for up-and-over door units, which can be constructed from surface-pretreated elements.

A further object is to provide a door of easy assembly, present appearance and low cost.

These and further objects which will be apparent to the expert of the art are attained by a door of the aforesaid type, characterised by comprising a plurality of modular panels connected together, and a plurality of strengthening and stiffening cross-members connected to said modular panels by plastic deformation at discrete points of said panels and said cross-members.

Advantageously the panels are connected to each other by clinching so as to obtain a door of the required dimensions. Both the panels and the cross-members can be pretreated, for example prepainted, because the said plastic deformation does not in any way damage the surface appearance of said parts.

In addition the door of the invention can be constructed completely automatically, with obvious advantages in terms of production time and cost.

The present invention will be more apparent from the accompanying drawings, which are provided by way of non-limiting example, and in which:

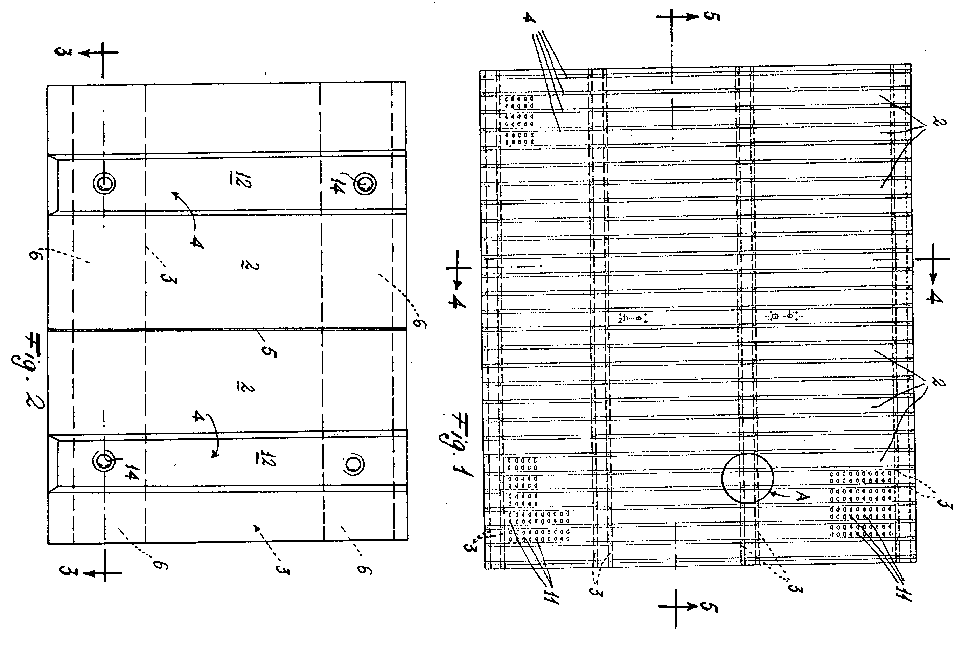

Figure 1 is a front view of a door according to the invention;
Figure 2 is an enlarged view of that detail of the door indicated by A in Figure 1;
Figure 3 is a section through the detail of Figure 2, taken on the line 3-3 thereof;
Figure 4 is a sectional part view of the door, taken on the line 4-4 of Figure 1;
Figure 5 is a sectional part view of the door, taken on the line 5-5 of Figure 1.

With reference to said figures, the door according to the invention, indicated overall by 1, comprises a plurality of modular panels 2 connected together, and a plurality of cross-members 3 connected to said panels 2. These latter are preferably in the form of a castellated flat section strip (see Figure 5) comprising a series of cavities 4 which extend along the entire length of the panel and have a flat wall 12 sunken from and parallel to the panel surface.

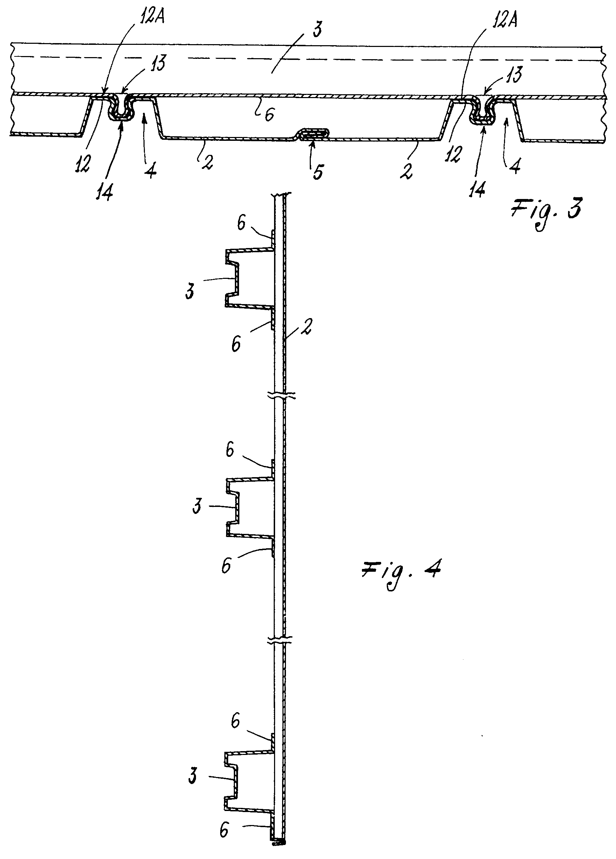

The panels are advantageously connected together along their major edges 5 by clinching, ie by folding them over one into the other and compressing the folded edges one against the other (as shown in Figure 3).

This operation can be performed automatically by conventional machines, of the type known to the expert of the art.

This method enables the panels to be securely joined together without ruining the panel surfaces.

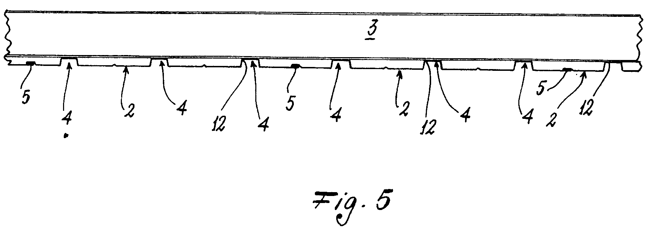

The cross-members 3 are preferably in the form of an omega-shaped section bar (see Figure 4) comprising two coplanar walls 6 arranged to rest on the inner face 12A of the sunken wall 12 of the panels 2.

To connect the cross-members 3 and panels 2 together, the walls 6 of the cross-members and the underlying sunken wall 12 of the panels 2 are deformed at predetermined spaced-apart points, in such a manner that a portion 13 (Figure 3) of each of the two said walls is curved outwards, so securely joining the two walls together at this portion 13.

This operation does not damage the surface treatment of the panels 3 or of the cross-members 3, and causes only a slight outward swelling 14 (Figures 2 and 3) at the points in which the two parts of the door are deformed.

The joint between the walls 6 and 12 is made for example by means of a pin (not shown however conventional) acting on the inner face of the walls 6 and a counter-pin resting on the outer face of the wall 12. The operation is performed advantageously automatically by known machines used mainly in the vehicle body field for forming a joint known conventionally as a TOX joint.

The door 1 also comprises a plurality of ventilation apertures 11, formed in the panels 2 in any known manner before the panels are connected together.

The panels 2 and cross-members 3 can be constructed of surface-pretreated materials such as usual galvanized sheets or sheets with their surface zinc or aluminium treated, or known prepainted or plastic-coated materials in that, as stated, the operations involved in assembling the door do not affect the surface treatment of said panels 2 and cross-members 3.

Finally, a door for an up-and-over door unit has been described, however doors for any type of door unit fall within the inventive concept of the present invention.

## Claims

1. A door in particular for up-and-over door units of motor vehicle garages, characterised by comprising a plurality of modular panels (2) connected together, and a plurality of strengthening and stiffening cross-members (3) connected to said panels (2) by plastic deformation at discrete points (13) of said cross-members (3) and said panels (2).

2. A door as claimed in claim 1, characterised in that said modular panels (2) are connected to each other by clinching their major edges (5).

3. A door as claimed in claim 1, characterised in that said modular panels have a castellated cross-section and comprise a plurality of recesses (4) extending along the entire length of the up-and-over, each of said recesses (4) having a flat sunken wall (12) parallel to the panel.

4. A door as claimed in the preceding claim, characterised in that said cross-members (3) have an omega-shaped cross-section and comprise flat walls (6) arranged to rest against the inner face of said sunken walls (12).

5. A door as claimed in claim 1, characterised in that said cross-members (3) and said modular panels are formed of materials which are surface-treated, for example painted or plastic-coated, before said cross-members and panels are connected together.
